Europäisches Patentamt

European Patent Office

Office européen des brevets

(19)

(11) Numéro de publication : **0 064 428**
**B1**

(12) **FASCICULE DE BREVET EUROPÉEN**

(45) Date de publication du fascicule du brevet :
**20.02.85**

(21) Numéro de dépôt : 82400582.1

(22) Date de dépôt : **30.03.82**

(51) Int. Cl.⁴ : **H 02 K 5/04**

(54) **Machine électrique tournante à carcasse en tôle.**

(30) Priorité : **14.04.81 FR 8107460**

(43) Date de publication de la demande :
**10.11.82 Bulletin 82/45**

(45) Mention de la délivrance du brevet :
**20.02.85 Bulletin 85/08**

(84) Etats contractants désignés :
**AT DE FR GB IT**

(56) Documents cités :
**AU-D- 4 691 579**
**DE-A- 2 259 448**
**FR-A- 2 000 873**
**US-A- 3 313 968**
**ABSTRACTS OF JAPAN, volume 6, no. 47(E-99) (925)**
**26 mars 1982**

(73) Titulaire : **SOCIETE ELECTRO MECANIQUE DU NIVERNAIS SELNI**
**173, boulevard Haussmann**
**F-75008 Paris (FR)**

(72) Inventeur : **Bourget, Jean**
**THOMSON-CSF SCPI 173, bld Haussmann**
**F-75360 Paris Cedex 08 (FR)**
Inventeur : **Bresson, Roger**
**THOMSON-CSF SCPI 173, bld Haussmann**
**F-75360 Paris Cedex 08 (FR)**

(74) Mandataire : **Grynwald, Albert et al**
**THOMSON-CSF SCPI 173, Bld Haussmann**
**F-75379 Paris Cedex 08 (FR)**

Jouve, 18, rue St-Denis, 75001 Paris, France

## Description

La présente invention concerne une machine électrique tournante à carcasse en tôle.

Des machines électriques tournantes comprenant à leurs extrémités, des flasques, et dans leur partie centrale, une carcasse constituée par une feuille de tôle enroulée en virole cylindrique et dont les bords sont soudés, ou par assemblage et soudage en virole, de plusieurs éléments préformés en portions de cylindre sont déjà connues. Dans la réalisation de ces machines, les cordons de soudure qui assurent le maintien en place des bords de la feuille de tôle enroulée en virole ou des bords des éléments préformés en portion de cylindre et, assemblés en virole, créent dans celle-ci des contraintes qui rendent difficile la mise au rond de la carcasse. En outre les tôles habituellement utilisées pour la fabrication des carcasses de ces machines sont choisies parmi les tôles épaisses pour obtenir des carcasses solides. Cependant, la rigidité résultant de l'importance de l'épaisseur de la tôle aggrave la difficulté de mise en forme des carcasses et cette importance de l'épaisseur des tôles utilisées contribue à augmenter leur poids et le prix de revient de ces carcasses.

Dans le Brevet FR-A-2 000 873 est décrit un perfectionnement à de telles carcasses où la virole porte une nervure transversale de raidissement qui permet d'assurer une forme cylindrique à la carcasse.

La présente invention permet de réaliser une machine électrique tournante ayant une carcasse en tôle, économique, légère, solide et facile à mettre au rond.

Suivant l'invention, une machine électrique tournante comportant une carcasse constituée d'une virole cylindrique réalisée avec une feuille de tôle galbée pour former un cylindre, ou des feuilles de tôle galbées pour former des portions de cylindre, et dont les bords longitudinaux en recouvrement sont assemblés, chaque feuille de tôle comportant au moins une nervure transversale dont une de ses extrémités est en retrait du bord de recouvrement, ce bord étant exempt de nervure transversale, est caractérisée en ce que le bord est muni d'au moins une encoche alignée avec la nervure transversale et destinée à recevoir l'autre extrémité de cette nervure transversale si la feuille de tôle est unique ou l'extrémité correspondante de la nervure transversale de la feuille de tôle voisine si la virole comporte plusieurs feuilles.

L'invention sera mieux comprise et d'autres caractéristiques apparaîtront à l'aide de la description ci-après et des dessins qui l'accompagnent et sur lesquels :

La figure 1 représente une vue schématique, en perspective, d'une machine électrique tournante selon un premier exemple de réalisation de l'invention, la carcasse de cette machine étant constituée par une feuille de tôle enroulée pour former une virole cylindrique.

La figure 2 représente une vue partielle schématique, en perspective, de deux éléments en tôle préformés en portions de cylindre et constituant par assemblage et soudage la virole d'une carcasse d'une machine électrique tournante selon un deuxième exemple de réalisation de l'invention.

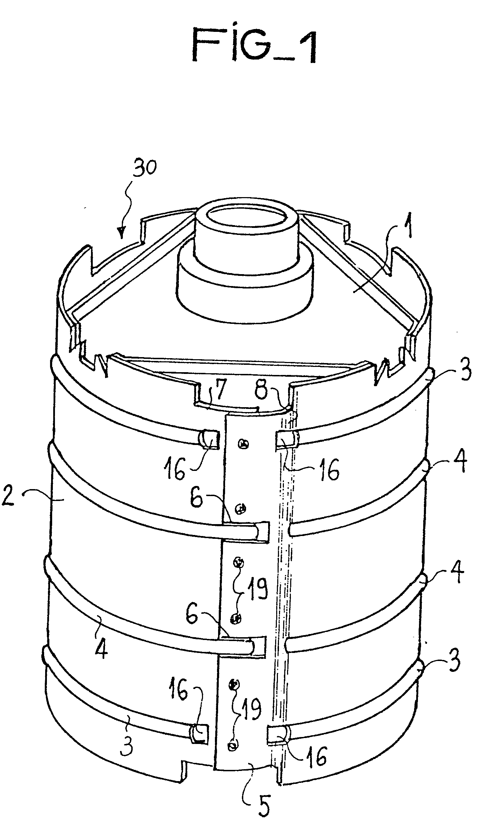

Une machine électrique tournante suivant l'invention, un moteur par exemple, comporte, comme montré dans l'exemple de la figure 1, une carcasse comprenant deux flasques 1 d'extrémité et une virole 2 constituée d'une feuille de tôle enroulée de façon à former un cylindre dont les bords 5, 7 longitudinaux se recouvrent sur toute leur longueur et sont soudés.

Selon une caractéristique importante de l'invention, pour réduire fortement les contraintes qui existent habituellement dans les viroles réalisées dans une tôle épaisse, la virole 2 de la machine suivant l'invention est obtenue à partir d'une tôle mince, ce qui permet d'avoir, dans les zones de raccordement des bords 5, 7, une bonne souplesse qui facilite la mise en forme de la virole 2.

Cette virole 2, cylindrique, comporte, dans l'exemple représenté en figure 1, deux nervures 4 transversales, parallèles et espacées l'une de l'autre. Le bord 5 de recouvrement, qui est exempt de nervures 4, est muni de deux encoches 6, telles que, lors de l'assemblage de la virole 2, ces encoches 6 puissent recevoir les extrémités correspondantes des nervures 4 se prolongeant sur le bord 7 recouvert par le bord 5. La coopération des nervures 4 et des encoches 6 assure un assemblage convenable de la virole 2 dont les bords 5, 7 en recouvrement peuvent alors être soudés ensemble.

Dans l'exemple de réalisation montré en figure 1, la virole 2 comporte, de plus, deux nervures 3, transversales, dites nervures courtes de rigidité, dont les deux extrémités s'arrêtent en retrait des deux bords 5, 7 en recouvrement, ces deux nervures 3 transversales, courtes, contribuant à la rigidité de la virole 2, étant placées, par exemple, de part et d'autre des nervures 4 transversales ou nervures d'alignement, destinées à coopérer avec les encoches 6 découpées dans le bord 5 exempt de nervures 4 (figure 1).

Afin d'assurer un recouvrement aisé des bords 5 et 7, le bord 5 de recouvrement présente un galbe 8 sur toute la longueur d'une génératrice de la virole 2 créant ainsi une dénivellation de surface sensiblement égale à l'épaisseur de l'autre bord 7 destiné à être recouvert par le bord 5. Cette dénivellation permet d'obtenir, après assemblage de la virole 2, une surface interne cylindrique pour cette virole 2.

Dans l'exemple de réalisation montré en figure 1, les extrémités des nervures 3, courtes, débouchent dans des ouvertures 16 de dégagement pratiquées dans la virole 2, ces ouvertures 16 permettant l'élimination locale des contraintes et une meilleure souplesse des bords 5, 7 en recouvrement.

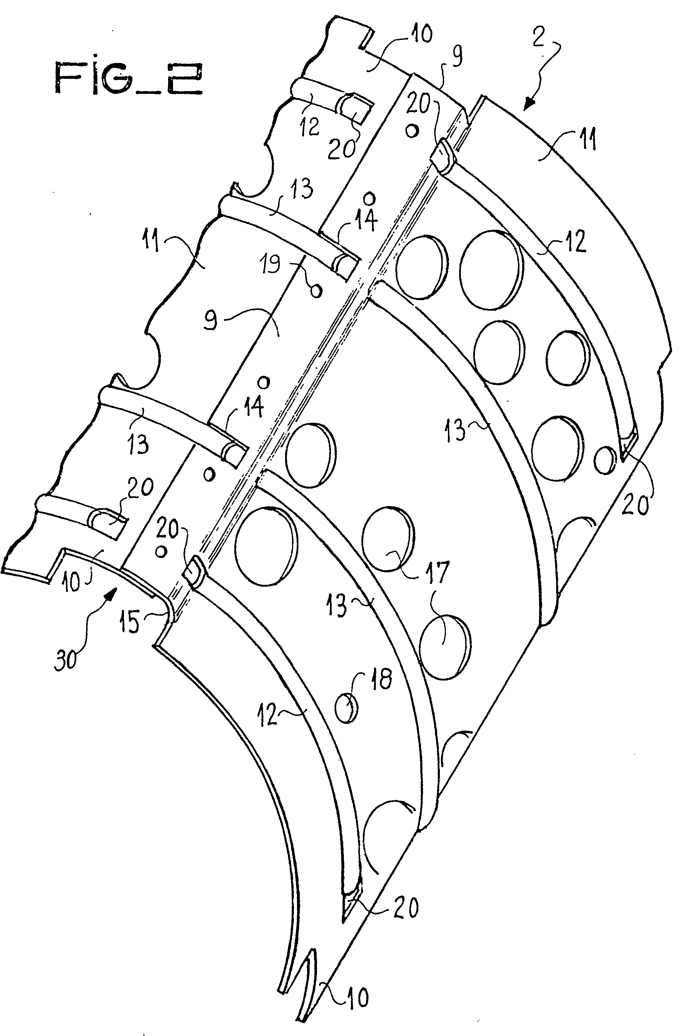

Dans un deuxième exemple de réalisation d'une machine électrique tournante suivant l'invention, montré en figure 2, la virole 2 est formée par l'assemblage de plusieurs éléments 11 préformés en portions de cylindre, les bords 9, 10 en vis-à-vis de deux éléments 11 consécutifs venant en recouvrement, étant réunis par soudage, par exemple. Chacun de ces éléments 11 est constitué d'une tôle mince préformée, munie de nervures 13 transversales, l'un 9 des bords 9, 10 longitudinaux de ces éléments 11 étant exempt de nervures 13 transversales et comportant des encoches 14 destinées à venir coopérer avec les nervures 13 de l'élément 11 adjacent, ces nervures 13 se prolongeant sur le bord 10 de recouvrement.

Comme dans l'exemple précédent, chacun des éléments 11 de la virole 2 peut aussi comporter des nervures 12 courtes dont les extrémités, en retrait des bords 9, 10 se terminent dans des ouvertures 20 de dégagement permettant d'éliminer les contraintes de la virole 2, tandis que les nervures 13 ont une de leurs extrémités se trouvant sur le bord 10 et venant s'introduire dans les encoches 14 situées en vis-à-vis au moment du montage de la virole 2.

Ce bord 9 peut présenter longitudinalement un galbe 15 (figure 2) créant une dénivellation de surfaces sensiblement égale à l'épaisseur de l'autre bord en recouvrement 10 de l'élément 11 adjacent. Cette dénivellation permet d'avoir, lors de l'assemblage, une virole 2 ayant une surface interne cylindrique.

Les extrémités des nervures courtes 12 débouchent de préférence dans des ouvertures de dégagement 20. Ces ouvertures 20 éliminent localement les contraintes et contribuent ainsi à donner aux bords 9, 10 en recouvrement des éléments adjacents 11 une meilleure souplesse.

Dans la virole 2 cylindrique, réalisée en une ou plusieurs parties, peuvent être formées des ouvertures ou trous 17 ou 18 pour, soit améliorer la circulation d'air de refroidissement, soit permettre une fixation des accessoires tels que des protecteurs thermiques, des boîtiers d'alimentation électrique, des condensateurs, etc... Des entailles 30 peuvent être également prévues sur les extrémités de la virole 2 pour faciliter le positionnement ou la mise en place des connecteurs électriques ou tout autre dispositif assurant le raccordement des câbles ou effectuant une autre fonction.

Pour faciliter l'assemblage par soudage des bords 5, 7 ou 9, 10 en recouvrement, les bords 5 ou 9 exempts des nervures 4 ou 13 sont munis de trous 19 de soudure.

Les caractéristiques structurelles de la virole 2, comme décrites ci-dessus, permettent d'obtenir facilement une bonne géométrie de cette virole 2 pendant et après la pose des points de soudure dans les trous 19.

La souplesse des zones de recouvrement réduit à un niveau négligeable les contraintes qui gênent l'opération de mise en forme de la virole 2.

## Revendications

1. Machine électrique tournante comportant une carcasse constituée d'une virole cylindrique réalisée avec une feuille de tôle galbée pour former un cylindre, ou des feuilles de tôle galbées pour former des portions de cylindre, et dont les bords longitudinaux en recouvrement sont assemblés, chaque feuille de tôle comportant au moins une nervure (4 ou 13) transversale dont une de ses extrémités est en retrait du bord (5 ou 9) de recouvrement, ce bord (5 ou 9) étant exempt de nervure (4) transversale, caractérisée en ce que le bord est muni d'au moins une encoche (6 ou 14) alignée avec la nervure (4 ou 13) transversale et destinée à recevoir l'autre extrémité de cette nervure (14) transversale si la feuille de tôle est unique ou l'extrémité correspondante de la nervure (13) transversale de la feuille de tôle voisine si la virole comporte plusieurs feuilles.

2. Machine suivant la revendication 1, caractérisée en ce que la virole (2) comporte, aussi, au moins une nervure courte (3 ou 12) transversale, parallèle à la nervure (4 ou 13) et dont les deux extrémités sont respectivement arrêtées en retrait des deux bords (5, 7 ou 9, 10) en recouvrement.

3. Machine suivant la revendication 2, caractérisée en ce que la nervure courte (3 ou 12) se termine sur des ouvertures (16) de dégagement ménagées dans la virole (2) et qui permettent l'élimination des contraintes.

4. Machine suivant l'une quelconque des revendications 1 à 3, caractérisée en ce que la virole (2) est munie de deux nervures (4 ou 13) transversales d'alignement et de deux nervures transversales courtes (3 ou 12), ces nervures (4 ou 13, 3 ou 12) étant parallèles et espacées.

5. Machine suivant l'une quelconque des revendications 1 à 4, caractérisée en ce que le bord (5 ou 9) de recouvrement exempt de nervure transversale présente un galbe (8 ou 15) permettant d'obtenir une dénivellation de surface égale à l'épaisseur du bord (7 ou 10) recouvert.

6. Machine suivant la revendication 5, caractérisée en ce que les extrémités circulaires de la virole (2) sont munies d'entailles (30) pour le passage de connexions.

7. Machine suivant l'une quelconque des revendications 1 à 6, caractérisée en ce que les bords (5, 7) sont assemblés par soudure et en ce que le bord (5) de recouvrement est muni de trous (19) prévus pour des soudures ponctuelles des bords (5, 7) en recouvrement.

## Claims

1. A rotary electric machine comprising a retainer formed of a cylindrical ring made with a sheet metal plate hollowed out to form a cylinder or with sheet metal plates hollowed out to form cylinder parts, the overlapping longitudinal rims of said plates being joined to each other, each sheet metal plate including at least one transverse rib (4 or 13) having one end thereof retreating from the overlapping rim (5 or 9), said rim (5 or 9) not being provided with a transverse rib (4), characterized in that the rim is formed with at least one cut-out (6 or 14) which is aligned with the transverse rib (4 or 13) and is used to receive the other end of said transverse rib (14) in case only one sheet metal plate is provided, or to receive the corresponding end of the transverse rib (13) of the adjacent sheet metal plate in case the ring comprises plural plates.

2. A machine as claimed in claim 1, characterized in that the ring (2) furthermore includes at least one short transverse rib (3 or 12) extending in parallel to the rib (4 or 13) and having both ends respectively retreating from the two overlapping rims (5, 7 or 9, 10).

3. A machine as claimed in claim 2, characterized in that the short rib (3 or 12) terminates at relief openings (16) formed in the ring (2) and permitting the elimination of strains.

4. A machine as claimed in any of the claims 1 to 3, characterized in that the ring (2) is provided with two transverse ribs (4 or 13) for alignment purposes and with two short transverse ribs (3 or 12), said ribs (4 or 13, 3 or 12) extending in parallel spaced relationship.

5. A machine as claimed in any of the claims 1 to 4, characterized in that the overlapping rim (5 or 9) which is not provided with a transverse rib is formed with a bulge (8 or 15) which makes it possible to obtain a level difference of the surface equal to the thickness of the overlapped rim (7 or 10).

6. A machine as claimed in claim 5, characterized in that the circular ends of the ring (2) are provided with recesses (30) for the passage of connections therethrough.

7. A machine as claimed in any of the claims 1 to 6, characterized in that the rims (5, 7) are joined by welding and that the overlapping rim (5) is provided with holes (19) for the spot welds of the rims (5, 7) which overlap each other.

**Ansprüche**

1. Rotierende elektrische Maschine mit einem Käfig, der aus einem zylindrischen Reifen besteht, der mit einer zum Formen eines Zylinders ausgebauchten Blechplatte oder zum Formen von Zylinderteilen ausgebauchten Blechplatten hergestellt ist, deren einander überdeckende Längsränder verbunden sind, wobei jede Blechplatte mindestens eine Querrippe (4 oder 13) aufweist, von der ein Ende vom Überdeckungsrand (5 oder 9) zurückspringt, wobei dieser Rand (5 oder 9) keine Querrippe (4) aufweist, dadurch gekennzeichnet, daß der Rand mit mindestens einem Ausschnitt (6 oder 14) versehen ist, der in einer Linie mit der Querrippe (4 oder 13) liegt und zur Aufnahme des anderen Endes dieser Querrippe (14), wenn nur eine Blechplatte vorhanden ist, oder des entsprechenden Endes der Querrippe (13) der benachbarten Blechplatte, wenn der Reifen mehrere Platten aufweist, dient.

2. Maschine nach Anspruch 1, dadurch gekennzeichnet, daß der Reifen (2) außerdem mindestens eine kurze Querrippe (3 oder 12) aufweist, die parallel zur Rippe (4 oder 13) verläuft und deren zwei Enden jeweils von den zwei Überdeckungsrändern (5, 7 oder 9, 10) zurückgesetzt enden.

3. Maschine nach Anspruch 2, dadurch gekennzeichnet, daß die kurze Rippe (3 oder 12) an Freisetzungsöffnungen (16) endet, die im Reifen (2) ausgebildet sind und die Beseitigung von Spannungen ermöglichen.

4. Maschine nach einem der Ansprüche 1 bis 3, dadurch gekennzeichnet, daß der Reifen 2 mit zwei der Ausrichtung dienenden Querrippen (4 oder 13) und zwei kurzen Querrippen (3 oder 12) versehen ist, wobei diese Rippen (4 oder 13, 3 oder 12) parallel und in Abstand zueinander verlaufen.

5. Maschine nach einem der Ansprüche 1 bis 4, dadurch gekennzeichnet, daß der keine Querrippe aufweisende Überdeckungsrand (5 oder 9) eine Ausbauchung (8 oder 15) besitzt, welche es ermöglicht, einen Niveauunterschied der Oberfläche gleich der Dicke des überdeckten Randes (7 oder 10) zu erhalten.

6. Maschine nach Anspruch 5, dadurch gekennzeichnet, daß die kreisrunden Enden des Reifens (2) mit Ausschnitten (30) für den Durchtritt von Verbindungen versehen sind.

7. Maschine nach einem der Ansprüche 1-6, dadurch gekennzeichnet, daß die Ränder (5, 7) durch Schweißen verbunden sind und daß der Überdeckungsrand (5) mit Löchern (19) für die Punktschweißverbindungen der einander überdeckenden Ränder (5, 7) versehen ist.

# FIG_1

FIG_2